# FASCICULE DE BREVET EUROPEEN

(11) **EP 1 482 289 B1**
(45) Date de publication et mention de la délivrance du brevet: **02.06.2010**
(21) Numéro de dépôt: 04102263.3
(22) Date de dépôt: 24.05.2004
(51) Int. Cl.: G01J 5/20

(54) **Procédé de détection bolométrique pour ondes (sub-)millimétriques utilisant un bolomètre à antenne ayant une cavité**
Bolometrisches Detetektionsverfahren für (Sub-)Millimeterwellen anhand eines antennengekoppelten Bolometers mit einem Hohlraum
Bolometric detection method of (sub-)millimeter waves using an antenna coupled bolometer having a cavity

(30) Priorité: 26.05.2003 FR 0350176
(43) Date de publication de la demande: 01.12.2004
(73) Titulaire: Commissariat à l'énergie atomique et aux énergies alternatives, 75015 Paris (FR)
(72) Inventeur: AGNESE, Patrick, 38000, GRENOBLE (FR); REY, Patrice, 38430, SAINT-JEAN DE MOIRANS (FR)
(74) Mandataire: Poulin, Gérard

(56) Documents cités:
- WO-A-00/40937
- US-A- 5 286 976
- US-B1- 6 329 655

## Description

### DOMAINE TECHNIQUE

La présente invention concerne un procédéde détection bolométrique à antenne, pour ondes électromagnétiques millimétriques ou submillimétriques.

L'invention concerne en particulier procédé utilisant une matrice de bolomètres à antennes pour l'adaptation à l'absorption d'ondes électromagnétiques millimétriques ou submillimétriques.

L'invention se rattache ainsi au domaine de la détection bolométrique passive, dans la gamme spectrale allant des longueurs d'ondes submillimétriques aux longueurs d'ondes millimétriques.

Dans cette gamme spectrale, il existe plusieurs fenêtres de transmission atmosphérique qui permettent d'obtenir des images en vue d'applications scientifiques, civiles ou militaires, notamment grâce à des matrices de bolomètres.

Les bolomètres mesurent la puissance du rayonnement incident : ce sont des détecteurs quadratiques. Dans un bolomètre, un élément absorbant convertit un flux lumineux incident en un flux calorifique, ce qui cause l'élévation de la température d'un élément sensible, par rapport à une température de référence. Un capteur thermométrique convertit ces variations de température en signaux électriques.

Bien qu'en théorie un bolomètre soit un détecteur sensible sur une très grande bande spectrale, les différents systèmes d'absorption existants sont optimisés pour une certaine bande restreinte.

Précisons dès maintenant que la présente invention concerne un procédé permettant de concevoir des matrices de bolomètres qui sont facilement adaptables à différentes bandes spectrales dans le domaine de l'invention et apportent une amélioration notable en termes de performances photométriques.

### ETAT DE LA TECHNIQUE ANTERIEURE

On considère ici la détection dans le large domaine spectral correspondant aux longueurs d'ondes submillimétriques (de l'ordre de 100µm) et millimétriques (quelques millimètres).

Actuellement, le domaine submillimétrique concerne des applications d'observations astrophysiques soit spatiales, soit aéroportées ou faites à l'aide de téléscopes placés au sol.

Le domaine millimétrique concerne non seulement des applications d'observations astrophysiques mais aussi des applications militaires ou civiles.

Pour les observations astrophysiques, la détection requiert de très hautes performances en termes de puissance détectable équivalente au bruit, cette puissance se situant dans la gamme de 10⁻¹⁷ à 10⁻¹⁵ W/Hz^{1/2}. L'obtention de telles performances nécessite des détecteurs refroidis à très basse température (de l'ordre de 0,3K pour les bolomètres).

La détection, pour l'observation au sol ou aéroportée, dans les applications militaires ou civiles, requiert des NEP, ou puissances équivalentes au bruit (« noise équivalent powers »), dans la gamme de 10⁻¹⁴ à 10⁻¹² W/Hz^{1/2} mais dans un domaine de températures du détecteur allant de 150 à 300K, en particulier pour des raisons opérationnelles et de coût.

On distingue donc deux contextes de détection millimétrique, à savoir celui des détecteurs très refroidis et celui des détecteurs à des températures « ambiantes ».

Dans ces deux contextes, on considère plus particulièrement des détecteurs matriciels, comportant des lignes et des colonnes de détecteurs élémentaires qui permettent de réaliser de l'imagerie rapide, par rapport à un système à mono-détecteur et balayage à deux dimensions.

On précise que l'invention ne concerne pas les bolomètres à grille, du genre de ceux qui sont décrits dans le document suivant :
[1] EP 0 749 007 A correspondant à US 5,825,029 A (Patrick Agnèse et Jean-Michel Sajer).
   L'invention est limitée aux bolomètres à antenne, au sujet desquels on se reportera aux documents suivants :
[2] WO 00/40937 A, « Détecteur bolométrique à antenne » (Patrick Agnèse)
[3] US 6,329,655 B, « Architecture and method of coupling electromagnetic energy to thermal detectors » (Michael D. Jack et al.).

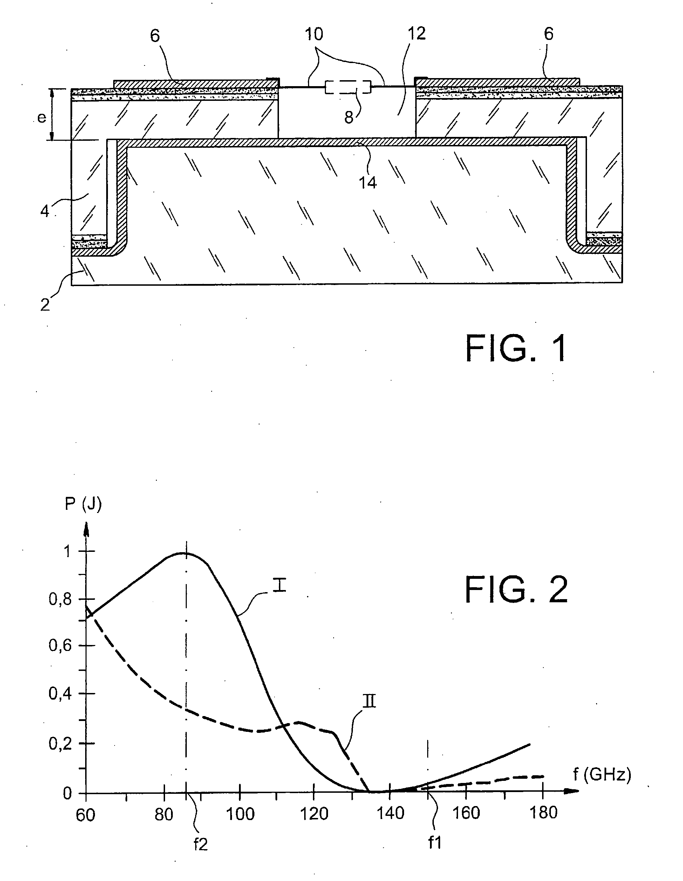

La figure 1 est une vue en coupe schématique d'un exemple connu de bolomètre millimétrique à antenne.

Un tel bolomètre comprend un substrat 2 qui est métallisé et une partie de détection 4 qui est gravée (« etched »), comme on le voit sur la figure 1. Cette partie de détection comprend une antenne 6 ainsi qu'un thermomètre central 8 qui est fixé à l'antenne 6 par l'intermédiaire de poutres ou bras 10 en un métal résistif.

Dans ce bolomètre, une cavité résonante 12, constituant une cavité quart-d'onde, est formée par encastrement du substrat 2 dans la partie de détection 4. Cette cavité 12 est rendue réflectrice par la métallisation 14 du substrat.

L'épaisseur ou hauteur e de la cavité 12, qui est égale à la distance entre l'antenne 6 et la métallisation 14, est adaptée à la détection d'un rayonnement de longueur d'onde déterminée λ : elle vaut λ/(4n), où n est l'indice optique du matériau de la partie de détection 4, qui délimite la cavité 12. Dans l'exemple de la figure 1, ce matériau est le silicium.

L'inconvénient d'une telle structure est que la cavité située sous l'antenne est délimitée par du silicium dont l'indice optique est relativement élevé. L'absorption spectrale a donc lieu dans une gamme étroite de longueurs d'ondes.

De plus, la valeur de la résistance de la charge (« load ») électrique d'antenne, constituée par les bras de suspension du thermomètre central, est trop limitée pour obtenir une absorption maximale du flux de rayonnement incident.

Par conséquent, comme cette charge constitue également la résistance thermique du bolomètre, on est contraint à une réponse de valeur relativement faible de la part de ce bolomètre.

Examinons plus précisément les inconvénients d'un bolomètre à antenne connu.

Un tel bolomètre comporte une cavité sous son antenne afin d'améliorer sa réponse en absorption. De façon classique, cette cavité a une épaisseur égale au quart de la longueur d'onde moyenne des rayonnements que l'on veut détecter.

Cette cavité est donc adaptée à une longueur d'onde donnée. De cette façon, les signaux qui sont directement absorbés et ceux qui ont traversé la cavité s'ajoutent en sortie et augmentent l'absorption totale.

Par ailleurs, si un milieu (« médium ») a un indice optique n, la résistance de charge (« load résistance ») R de ce milieu est égale à Z₀/n, où Z₀ est l'impédance du vide (« vacuum ») qui vaut 377Ω. Dans le cas d'une cavité quart d'onde, ayant un indice optique n et une épaisseur λ/4n, où λ est la longueur d'onde moyenne des rayonnements à détecter, la résistance de charge devient : R=Z₀/n.

La résistance de charge R peut donc valoir au maximum Z₀ si le matériau est le vide, sachant qu'il est très difficile d'avoir du vide car les antennes sont rarement autoportables.

US 5 286 976 décrit une conception de microstructure pour haute sensibilité IR.

### EXPOSÉ DE L'INVENTION

La présente invention vise à augmenter les performances des bolomètres à antenne connus et, plus particulièrement, à améliorer la résistance de charge de tels bolomètres, de manière à obtenir une faible conductance thermique sans pour autant dégrader l'absoption du rayonnement par ces bolomètres.

Une solution consisterait à trouver un matériau sous-antenne dont l'indice optique serait inférieur à 1, ce qui est impossible. Il faut donc trouver un moyen pour que l'indice « apparent » (vu par l'onde incidente) soit inférieur à 1. Pour cela, conformément à l'invention, on utilise non plus une cavité quart d'onde mais une cavité d'épaisseur plus faible.

Dans ces conditions, le rayonnement directement absorbé et le rayonnement retransmis par la cavité ne s'ajoutent plus simplement.

Mais alors un autre phénomène a lieu et fait que, de façon surprenante, l'absorption est augmentée.

Cette absorption est mesurée par des simulations qui mettent en oeuvre les équations de Maxwell.

Notons que l'invention constitue, en particulier un perfectionnement du procédé connu par le document [2].

De façon précise, la présente invention a pour objet un procédé de détection bolométrique d'ondes électromagnétiques millimétriques ou submillimétriques, tel que défini dans la revendication 1.

L'antenne réceptrice est par exemple une antenne quadrupolaire.

Le bolomètre peut être de type refroidi ou, au contraire, de type non refroidi.

Le dispositif objet de l'invention comprend de préférence une matrice de MxN bolomètres, M et N étant des entiers au moins égaux à 1.

Selon un mode de mise en oeuvre préféré du procédé objet de l'invention, ce substrat comprend une structure de silicium massif/silice/couche mince de silicium/silice/couche mince de silicium.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 est une vue en coupe schématique d'un bolomètre à antenne connu et a déjà été décrite,
- les figures 2 et 3 montrent des courbes traduisant des résultats de la simulation du comportement électromagnétique de bolomètres à antenne,
- la figure 4 est une vue en coupe schématique d'un exemple de dispositif bolométrique utilisable selon un procédé conforme à l'invention,
- les figures 5A à 5L illustrent schématiquement des étapes d'un exemple de procédé de fabrication, et
- la figure 6 illustre schématiquement un dispositif bolométrique matriciel utilisable selon le procédé conforme à l'invention.

### EXPOSÉ DÉTAILLÉ DE MODES DE RÉALISATION PARTICULIERS

Dans un exemple, le dispositif bolométrique comprend une antenne réceptrice quadrupolaire dont la topologie, la cavité résonante et la charge résistive sont toutes trois optimisées.

A titre d'exemple, on vise une fréquence centrale de détection optique f égale à 94 GHz, avec une largeur de bande d'au moins 40 GHz, sans sélectivité de polarisation et au moyen d'une antenne dont le pas (« pitch ») est égal à λ/2=1,6 mm, où λ est la longueur d'onde centrale correspondant à la fréquence f.

L'optimisation d'un tel bolomètre à antenne passe par l'augmentation de la charge d'antenne, ou charge résistive, car alors la réponse thermique augmente.

Pour pouvoir augmenter cette charge, sans pour autant dégrader la réponse optique ni la courbe d'absorption spectrale correspondante, il faut adapter la structure d'antenne et sa cavité résonante sous-jacente.

On a effectué des simulations du comportement électromagnétique du dispositif pourvu de l'antenne quadrupolaire.

Dans une première simulation, le pas de cette antenne vaut 1,6 mm et l'on utilise une cavité résonante vide de 0,5 mm d'épaisseur. Les variations résultantes de la puissance d'absorption P (en joules) en fonction de la fréquence f (en GHz) sont tracées sur la figure 2 pour une charge résistive de 200 Ω (courbe I) et pour une charge résistive de 1500 Ω (courbe II).

Pour une charge de 200 Ω, on n'observe pas l'effet de « quart d'onde » que l'on attendait à λ=2 mm, correspondant à f₁=150 GHz (pour e=0,5 mm la longueur d'onde maximale λₘₐₓ vaut 4xe=2 mm) : le maximum est atteint à λ=3,5 mm qui correspond à f₂=86 GHz.

Donc, la cavité quart d'onde n'a pas d'effet prépondérant : il existe un autre effet de résonance, à savoir une excitation d'ondes de surface.

Par ailleurs, on s'aperçoit que le pic à 86 GHz s'affaisse lorsque la résistance de charge passe de 200 Ω à 1500 Ω, ce qui n'est pas intéressant puisque l'on veut augmenter cette charge.

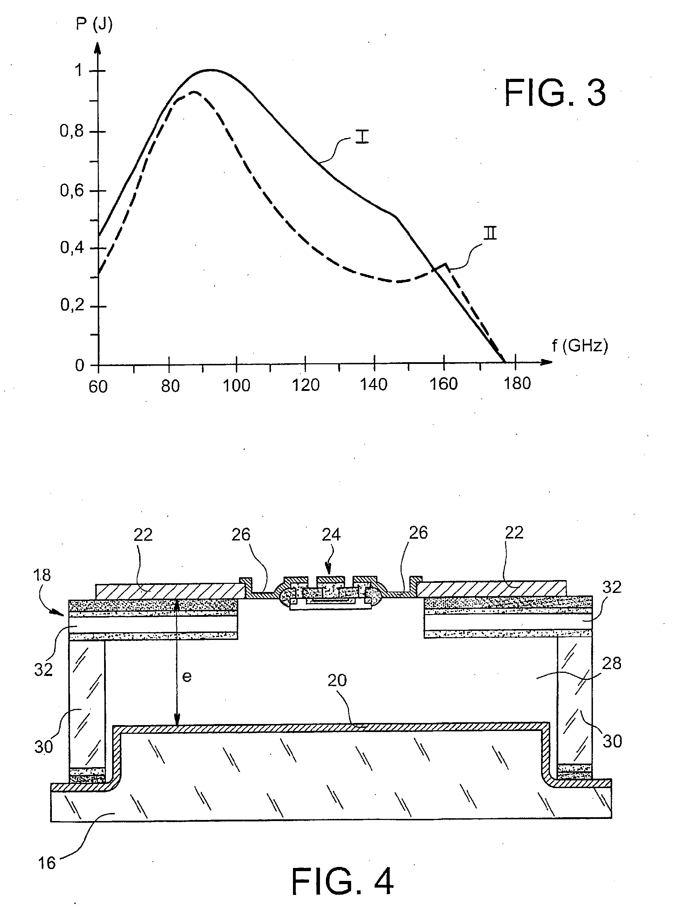

Dans une deuxième simulation, l'épaisseur de la cavité est plus faible : elle vaut 0,2 mm ; l'antenne a encore la structure quadrupolaire, mais avec un pas de 1,28 mm. Les résultats de cette simulation sont donnés par la figure 3, pour une charge de 750 Ω (courbe I) et pour une charge de 1500 Ω (courbe II).

On s'aperçoit donc que le maximum d'absorption continue d'être obtenu vers 90 GHz avec une cavité de 0,2 mm d'épaisseur mais, dans ce cas, pour plusieurs valeurs de la résistance de charge et surtout des valeurs plus élevées. On a donc tout intérêt à diminuer l'épaisseur de la cavité.

En revenant à la deuxième simulation, on trouve un premier compromis pour un pas de 1,3 mm, une cavité de 0,2 mm d'épaisseur et une charge de 1500Ω, d'où une augmentation d'un facteur 7,5 par rapport au cas de la première simulation.

Dans un mode de réalisation préféré, la difficulté de fabrication d'une cavité vide, ayant par exemple une épaisseur de 200 µm, en minimisant l'épaisseur du silicium sous l'antenne, est contournée si, au lieu d'utiliser un substrat de type SOI (silicium massif (« bulk »)/silice/couche mince de silicium), on utilise un substrat de type double SOI, également appelé « substrat DSOI » (silicium massif/silice/couche mince de silicium (généralement de quelques micromètres d'épaisseur) /silice/couche mince de silicium).

On contrôle ainsi l'épaisseur de silicium, indépendamment de la dispersion de gravure (« etching ») profonde par la face arrière du substrat, sous une antenne de taille millimétrique, de manière à garantir la planéité de cette antenne et d'éviter l'effet de « drap plissé » résultant d'une contrainte de la couche métallique servant à la formation de l'antenne.

On aboutit ainsi à un exemple de bolomètre qui est schématiquement représenté en coupe sur la figure 4.

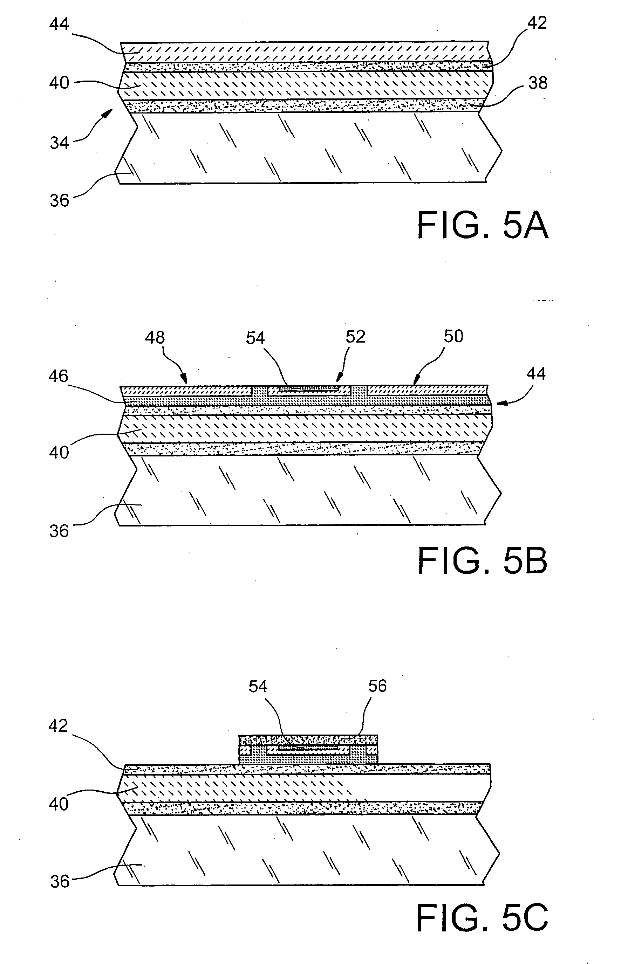

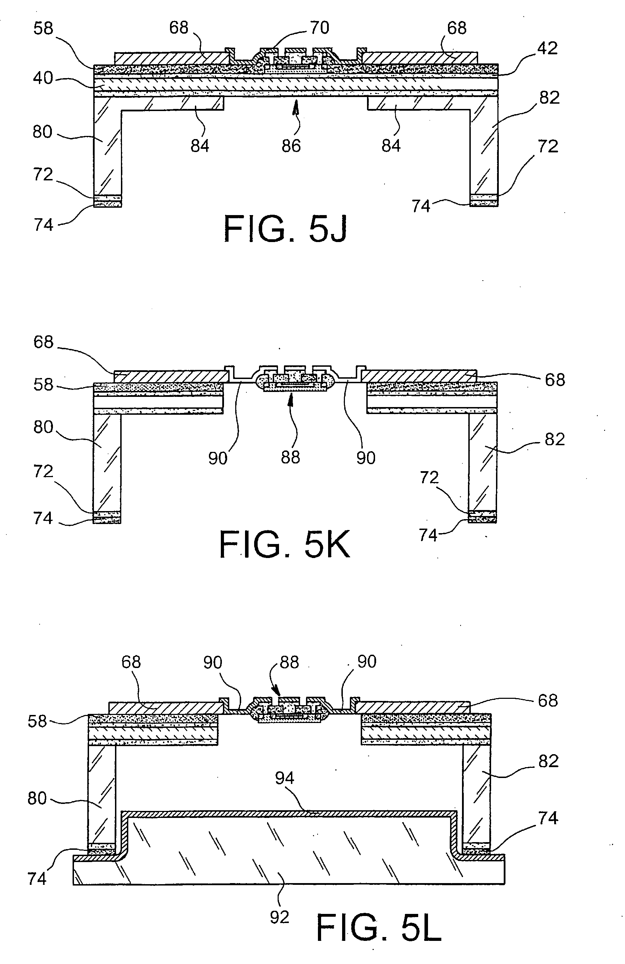

On donnera plus loin un exemple de procédé permettant d'aboutir au bolomètre de la figure 4 : cette figure correspond à la figure 5L qui montre l'aboutissement des étapes illustrées par les figures 5A à 5K.

Le bolomètre de la figure 4 comprend un substrat 16 en silicium ainsi qu'une partie de détection 18 qui est formée à partir de silicium. Le substrat 16 est emboîté dans cette partie 18, par la face arrière de celle-ci.

La surface de ce substrat 16, qui est en regard de la partie de détection 18, est revêtue d'une couche mince électriquement conductrice 20, constituant un réflecteur.

La partie de détection 18 comprend une antenne 22, par exemple de type quadrupolaire, et un thermomètre central 24 qui est suspendu à l'antenne par des poutres 26 faites d'un métal résistif.

Le bolomètre de la figure 4 comprend aussi une cavité résonante 28 qui est vide et constituée par l'espace compris entre la partie de détection 18 et le réflecteur 20. L'antenne 22 est située au-dessus de cette cavité 28.

L'épaisseur e de cette dernière est la distance entre l'antenne 22 et le réflecteur 20. Conformément à l'invention, cette épaisseur e est strictement inférieure à λ/(4n) où λ est la longueur d'onde moyenne des rayonnements que l'on veut détecter avec le bolomètre et n est l'indice optique du matériau qui délimite la cavité (ici le silicium de la partie de détection).

Typiquement, la partie de détection 18 comporte une première couche de silicium 30 de quelques micromètres d'épaisseur, qui permet de garantir la tenue mécanique de l'antenne sur la cavité vide sous-jacente, dont la hauteur est ajustable grâce au substrat réflecteur 16 qui est mobile.

La partie de détection comporte aussi une deuxième couche de silicium 32 de quelques dixièmes de micromètre d'épaisseur, qui sert à la réalisation du thermomètre 18. Ce dernier est suspendu par les poutres 26 faites d'un métal résistif, par exemple TiN ou TaN.

Une telle structure résout les problèmes mentionnés plus haut. En effet, pour ce qui concerne les bolomètres millimétriques aux températures ambiantes, grâce à la simulation précédemment présentée, on a effectivement formé une cavité vide et obtenu une augmentation sensible de la charge résistive et donc de la résistance thermique du bolomètre.

Pour ce qui concerne les bolomètres submillimètriques aux températures inférieures à 1K, on a effectivement réduit la masse calorifique au minimum, c'est-à-dire à celle du thermomètre, puisque la fonction de détection des ondes (antenne), et la fonction bolométrique (c'est-à-dire la fonction thermomètre et poutres) sont à présent dissociées topologiquement, contrairement à la technique divulguée par le document [1].

Le métal qui constitue les poutres de suspension 26 devient supraconducteur en dessous de quelques kelvins. Donc, à une température de quelques dixièmes de kelvin, les poutres ont une très haute résistance thermique.

Ce métal reste néanmoins résistif à la haute fréquence d'une onde électromagnétique incidente. Donc les courants électriques de surface, induits par l'onde sur l'antenne, se dissipent par effet Joule dans la charge résistive constituée par ces poutres, ce qui conduit à l'élévation de température du thermomètre.

En faisant référence aux figures 5A à 5L, on explique maintenant un exemple du procédé de fabrication, permettant d'obtenir le bolomètre de la figure 4. Pour fabriquer ce bolomètre, on utilise un substrat 34 (figure 5A) qui constitue un substrat DSOI.

Ce substrat 34 est ainsi un empilement constitué par :
- un substrat de silicium massif (« bulk ») 36, dont l'épaisseur vaut par exemple 450 µm,
- une couche mince de silice enterrée 38, dont l'épaisseur vaut par exemple 380 nm,
- une couche mince de silicium épitaxié 40, dont l'épaisseur vaut par exemple 5µm,
- une autre couche mince de silice enterrée 42, dont l'épaisseur vaut par exemple 380 nm, et
- une autre couche mince de silicium épitaxié 44, dont l'épaisseur vaut par exemple 1µm.

On procède ensuite à des implantations ioniques dans la couche supérieure 44 (figure 5B), à savoir :
- une première implantation ionique de silicium dopé p++ (référence 46 sur la figure 5B) pour définir trois zones de silicium dans la couche 44, dont les références sont 48, 50 et 52, et
- une deuxième implantation ionique pour former, dans la zone centrale 52, une zone 54 de silicium dopé n++, dont l'épaisseur vaut par exemple 500 nanomètres.

Ensuite, par photolithographie et gravure mesa (« mesa etching »), on élimine la majeur partie du silicium des zones 48 et 50 et du silicium sous-jacent dopé p++ de ces zones pour laisser essentiellement subsister la zone 52 comme on le voit sur la figure 5C.

Sur cette dernière, on dépose ensuite une couche très mince 56 de résine photosensible, par exemple une couche de résine 5740 de 7 µm d'épaisseur.

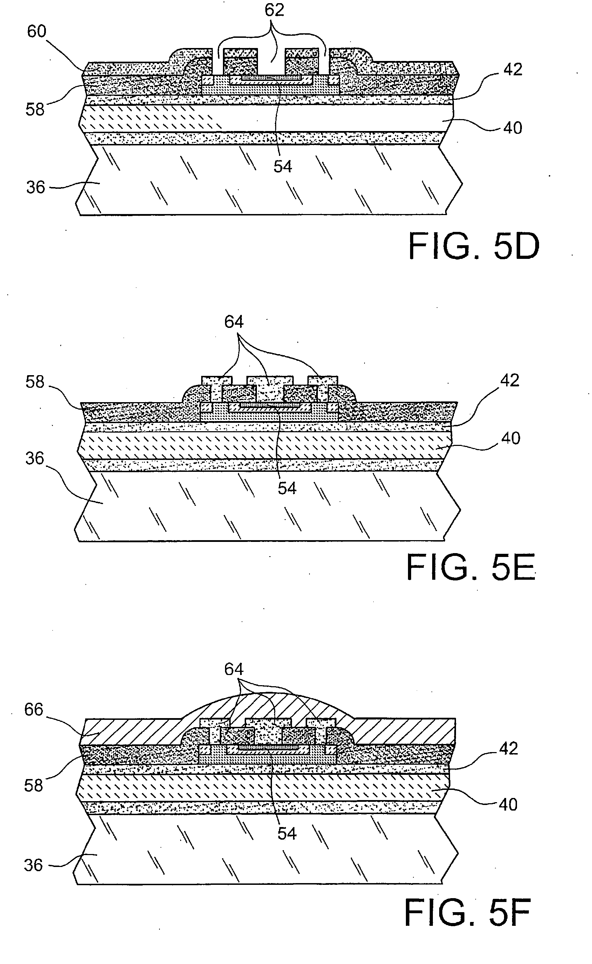

Ensuite, comme le montre la figure 5D, on procède à des photolithographies et à des gravures de contacts.

Après avoir éliminé la couche de résine 56, on est ainsi amené à déposer, sur la structure résultante, une couche 58 de silice, dont l'épaisseur vaut par exemple 1 µm, puis, sur cette couche 58, une couche 60 de résine photosensible, par exemple une couche de résine 5740 (Société Shipley) de 7 µm d'épaisseur.

On forme alors, à travers les couches 58 et 60, des ouvertures 62 telles que représentées sur la figure 5D.

Ensuite, comme le montre la figure 5E, on forme, à travers ces ouvertures 62, des contacts électriques 64 en AlSi sur une épaisseur égale à 150 nm.

Comme le montre la figure 5F, on dépose ensuite une couche 66 de métal réflecteur sur la structure obtenue, par exemple une couche d'or de 400nm d'épaisseur.

Cette couche va servir à la formation de l'antenne du bolomètre.

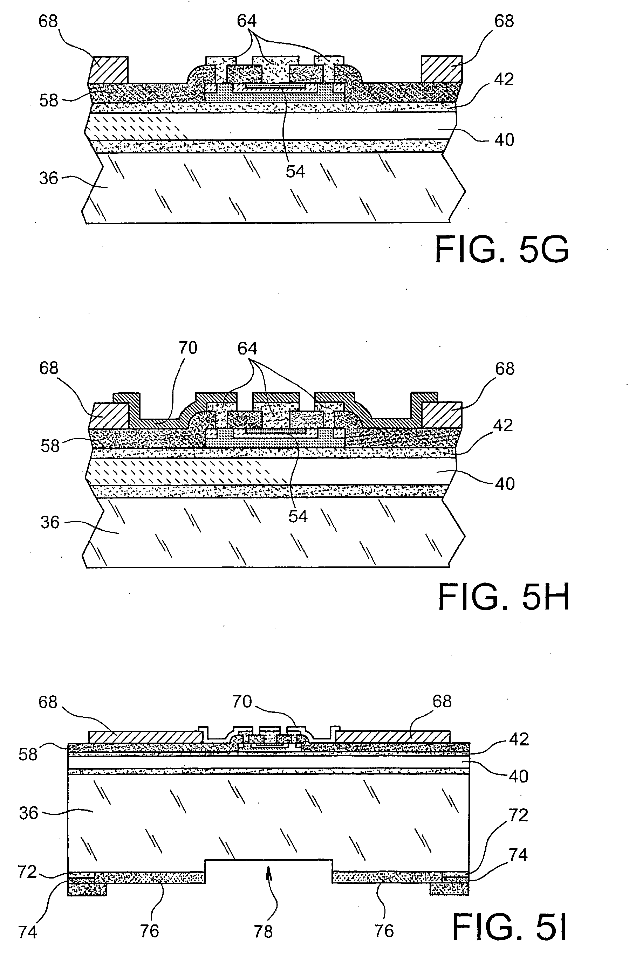

On grave ensuite le métal de cette antenne comme le montre la figure 5G. On obtient ainsi l'antenne 68 au-dessus de la couche 60.

Ensuite, comme le montre la figure 5H, on dépose une couche de TaN ou de TiN, ayant par exemple une épaisseur de 90 nm, puis on grave la couche ainsi déposée pour former les bras 70 du bolomètre, servant à supporter le thermomètre central de ce bolomètre.

On traite ensuite la face arrière du substrat de silicium massif 36 de manière à obtenir, à l'aide d'une série de dépôts et de gravures, la structure que l'on voit sur la figure 5I.

Sur la face arrière du substrat, aux deux extrémités de celui-ci, subsiste alors une couche 72 de silice TEOS, de 1 µm d'épaisseur par exemple, et de faible largeur, par exemple 50nm. Sur cette dernière subsiste également une couche d'oxyde 74 obtenue par PECVD, de 2 µm d'épaisseur par exemple et de même largeur que la couche 72.

Comme on le voit, des deux côtés du substrat 36 subsiste également une couche de résine photosensible 76, par exemple une couche de résine 5740 d'épaisseur 7 µm, qui s'étend des deux côtés du substrat en recouvrant les couches 72 et 74 de faible largeur, tout en laissant apparaître une partie centrale 78 du substrat 36 que l'on a gravé sur une faible épaisseur, de l'ordre de 5µm par exemple.

Ensuite, comme le montre la figure 5J, on procède à une deuxième série de gravures du silicium et de la silice, toujours par la face arrière du substrat 36.

On élimine ainsi la plupart de ce substrat 36 en ne laissant subsister que des parties latérales 80 et 82 du silicium, qui permettront l'encastrement ultérieur du substrat recouvert de la couche réflectrice. Ces parties latérales 80 et 82 ont la largeur des couches 72 et 74 comme on le voit.

En outre, des parties 84 du silicium du substrat 36 subsistent dans les zones situées sous l'antenne, en continuité avec les parties latérales 80 et 82, ces parties 84 ayant une faible épaisseur, de l'ordre de 5µm.

En revanche, le silicium du substrat 36 a disparu totalement dans la zone 86 délimitée par les parties 84, comme on le voit sur la figure 5J, c'est-à-dire sous la partie correspondant au thermomètre central et aux poutres ou bras associés.

Ensuite, comme le montre la figure 5K, on procède à une troisième série de gravures du silicium et de la silice, par la face arrière de la structure obtenue à la figure 5J, pour éliminer les zones de silicium 84 de cette structure et obtenir le thermomètre central 88 du bolomètre ainsi que les bras 90 grâce auxquels ce thermomètre est porté par l'antenne du bolomètre.

Pour compléter la formation du bolomètre, on fabrique un substrat en silicium 92 apte à être encastré dans la structure obtenue à la figure 5K, par la face arrière de cette structure, comme on le voit sur la figure 5L.

Avant d'encastrer ce substrat 92 dans la structure, on dépose, sur la face du substrat destinée à l'encastrement, une couche électriquement conductrice 94 de faible épaisseur, par exemple une couche d'or de 400 nm d'épaisseur.

Comme le montre la figure 5L, on encastre ensuite le substrat 92 ainsi rendu réflecteur dans la structure de la figure 5K, la profondeur d'encastrement étant réglée en fonction de l'épaisseur choisie pour la cavité résonante du bolomètre.

Dans un dispositif bolométrique, l'antenne quadrupolaire peut être remplacée par toute autre antenne compatible avec un tel dispositif, par exemple une antenne spirale.

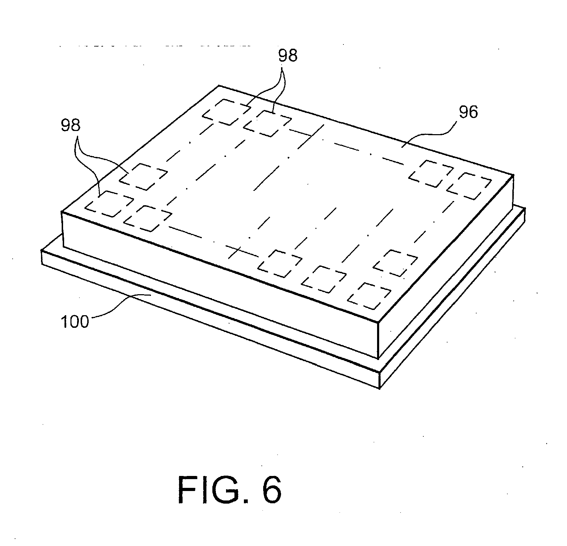

En outre, les exemples du dispositif, que l'on a donnés jusqu'à présent, ne comportent qu'un bolomètre. Cependant, en pratique, on utilise plutôt une matrice 96 de tels bolomètres comme le montre schématiquement la figure 6.

Les bolomètres 98 de cette matrice 96 sont formés à partir d'un même substrat DSOI, sur lequel on prévoit les isolations électriques (non représentées) qui sont nécessaires aux bolomètres.

De plus, on prévoit un substrat réflecteur 100 pour un encastrement collectif dans les parties de détection (non représentées) des bolomètres 98.

## Revendications

1. Procédé de détection d'ondes électromagnétiques millimétriques ou submillimétriques, dans une bande ayant une fréquence centrale f correspondant à une longueur d'onde centrale λ, dans lequel on utilise un dispositif bolométrique comprenant au moins un bolomètre comportant une charge résistive (26, 90), une partie de détection (18), qui comprend une antenne réceptrice (22) et un élément thermométrique (24), un substrat réflecteur (16, 92) qui est encastré dans cette partie de détection, et une cavité délimitée par la surface réfléchissante (20, 94) de ce substrat réflecteur et l'antenne réceptrice, ce procédé étant **caractérisé en ce que** l'épaisseur de la cavité est plus faible que celle d'une cavité quart d'onde, de telle sorte qu'un phénomène d'excitation d'ondes de surface a lieu qui entraîne une absorption du rayonnement incident supérieure à celle correspondant à une cavité quart d'onde.

2. Procédé selon la revendication 1, dans lequel l'antenne réceptrice est une antenne quadrupolaire (22, 68).

3. Procédé selon l'une quelconque des revendications 1 et 2, dans lequel le bolomètre est de type refroidi.

4. Procédé selon l'une quelconque des revendications 1 et 2, dans lequel le bolomètre est de type non refroidi.

5. Procédé selon l'une quelconque des revendications 1 à 4, dans lequel on utilise une matrice (96) de MxN bolomètres, M et N étant des entiers au moins égaux à 1.

6. Procédé selon l'une quelconque des revendications 1 à 5, dans lequel on forme le bolomètre comportant l'antenne préceptrice (68), la charge résistive (90), l'élément thermométrique (88) et la cavité, à partir d'un substrat (34) comprenant une structure de silicium massif/silice/couche mince de silicium.

7. Procédé selon la revendication 6, dans lequel le substrat (34) comprend une structure de silicium massif/silice/couche mince de silicium/silice/couche mince de silicium.

## Claims

1. Method for detection of millimetric or sub-millimetric electromagnetic waves, in a range having a central frequency corresponding to a central wavelength λ, wherein a bolometric device is used, comprising at least one bolometer comprising a resistive load (26, 90), a detection part (18) that comprises a receiving antenna (22) and a thermometric element (24), a reflecting substrate (16, 92) embedded in this detection part, and a cavity delimited by the reflecting surface (20, 94) of this reflecting substrate and the receiving antenna, this method being **characterized in that** the thickness of the cavity is smaller than that of a quarter wave cavity, so that a surface wave excitation phenomenon takes place which causes an incident radiation absorption greater than that corresponding to a quarter wave cavity.

2. Method according to claim 1, in which the receiving antenna is a quadrupole antenna (22, 68).

3. Method according to any one of claims 1 and 2, in which the bolometer is of the cooled type.

4. Method according to any one of claims 1 and 2, in which the bolometer is of the uncooled type.

5. Method according to any one of claims 1 to 4, wherein a matrix (96) of M x N bolometers is used, where M and N are integers equal to at least 1.

6. Method according to any one of claims 1 to 5, in which the bolometer comprising the receiving antenna (68), the resistive load (90), the thermometric element (88) and the cavity is formed from a substrate (34) comprising a bulk silicon / silica / thin silicon layer structure.

7. Method according to claim 6, in which the substrate (34) comprises a bulk silicon / silica / thin silicon layer / silica / thin silicon layer structure.

## Patentansprüche

1. Verfahren zur Detektion von elektromagnetischen Millimeter- oder Submillimeterwellen in einem Band mit einer einer zentralen Wellenlänge λ entsprechenden zentralen Frequenz f, bei dem man eine bolometrische Vorrichtung benutzt, umfassend: wenigstens ein Bolometer mit einem Belastungswiderstand (26, 90), einen eine Empfangsantenne (22) und ein thermometrisches Element (24) umfassenden Detektionsteil (18), ein in diesen Detektionsteil eingefügtes Reflektorsubstrat (16, 92), und einen durch die reflektierende Oberfläche (20, 94) dieses Reflektorsubstrats und die Empfangsantenne begrenzten Resonator,
wobei dieses Verfahren **dadurch gekennzeichnet ist, dass** die Dicke des Resonators kleiner ist als die eines Viertelwellenresonators, so dass ein Oberflächenwellenerregungsphänomen stattfindet, das eine Absorption der einfallenden Strahlung bewirkt, die größer als die einem Viertelwellenresonator entsprechende ist.

2. Verfahren nach Anspruch 1, bei dem die Empfangsantenne eine Quadrupolantenne (22, 68) ist.

3. Verfahren nach einem der Ansprüche 1 und 2, bei dem der Bolometer vom gekühlten Typ ist.

4. Verfahren nach einem der Ansprüche 1 und 2, bei dem der Bolometer vom ungekühlten Typ ist.

5. Verfahren nach einem der Ansprüche 1 bis 4, bei dem man eine Matrix (96) aus MxN Bolometern benutzt, wobei M und N ganze Zahlen wenigstens gleich 1 sind.

6. Verfahren nach einem der Ansprüche 1 bis 5, bei dem man das die Empfangsantenne (68), den Belastungswiderstand (90), das thermometrische Element (88) und den Resonator umfassende Bolometer aus einem Substrats (34) bildet, das eine Massivsilicium/Siliciumdioxid/Siliciumdünnschicht-Struktur aufweist,

7. Verfahren nach Anspruch 6, bei dem das Substrat (34) eine Massivsilicium/Siliciumdioxid/Siliciumdünnschicht/Siliciumdioxid/Siliciumdünnschicht-Struktur aufweist.
